Europäisches Patentamt

European Patent Office

Office européen des brevets

(11) Numéro de publication: **0 394 156**
**A1**

## (12) DEMANDE DE BREVET EUROPEEN

(21) Numéro de dépôt: 90430009.2

(22) Date de dépôt: 20.04.90

(51) Int. Cl.5: **G01C 22/00**

(30) Priorité: 21.04.89 FR 8905766

(43) Date de publication de la demande:
24.10.90 Bulletin 90/43

(84) Etats contractants désignés:
BE CH DE ES GB IT LI LU NL

(71) Demandeur: **MIDI-ROBOTS (SOCIETE ANONYME)**
**Technoparc 1 - Voie No. 5, Labege Innopole**
**F-31320 Castanet Tolosan(FR)**

(72) Inventeur: **Wallart, Jean-Pierre**
**4 Lieu dit Le Petit Choyne, Calmont**
**F-31560 Nailloux(FR)**
Inventeur: **Cremien, Didier**
**83, rue du Férétra**
**F-31400 Toulouse(FR)**

(74) Mandataire: **Moretti, René**
**c/o Cabinet BEAU DE LOMENIE**
**"Prado-Mermoz" 232, Avenue du Prado**
**F-13008 Marseille(FR)**

(54) **Dispositif odométrique pour véhicule autonome sur roues, notamment véhicule autonome industriel, tel que robot industriel.**

(57) L'invention concerne un dispositif odométrique pour véhicule autonome, notamment véhicule autonome industriel tel que robot industriel, doté d'un châssis sur roues, dont au moins une roue motrice (2) reliée à un bloc moteur par un arbre moteur (3). Le dispositif odométrique se caractérise en ce qu'il comprend une roue libre (4), dite odométrique, montée libre en rotation de façon que son axe de rotation soit parallèle à celui de la roue motrice (2) et disposé dans un même plan vertical que celui-ci, des organes-supports (10, 11, 13) de cette roue odométrique (4) adaptés pour la solidariser au châssis du véhicule avec une liberté de débattement selon un axe orthogonal au plan de roulement de la roue motrice (2) et un capteur rotatif (14) de mesure des déplacements annulaires de la roue odométrique (4).

Fig. 1

# DISPOSITIF ODOMETRIQUE POUR VEHICULE AUTONOME SUR ROUES, NOTAMMENT VEHICULE AUTONOME INDUSTRIEL, TEL QUE ROBOT INDUSTRIEL

L'invention concerne un dispositif odométrique pour véhicule autonome sur roues, notamment véhicule autonome industriel tel que robot industriel.

Les robots industriels autonomes sur roues destinés à effectuer des tâches spécifiques telles que nettoyage industriel, transport... sont tous dotés d'un dispositif odométrique destiné à délivrer vers l'unité centrale de programmation de ces robots des informations relatives aux distances parcourues par ces derniers. Les dispositifs odométriques actuels consistent en des capteurs rotatifs de mesure angulaire disposés de façon à mesurer le nombre de tours effectués, soit directement par une des roues motrices du robot, soit par le moteur ou le réducteur. Bien que ces capteurs présentent un très grand degré de précision, leur disposition engendre des erreurs de mesure préjudiciables lors de la commande de robots totalement autonomes pilotés par une unité centrale programmée pour délivrer, en fonction de la position du robot déterminée par ces capteurs, des signaux de commande destinés à engendrer un changement de direction, l'exécution d'une tâche spécifique ou toute autre manoeuvre. En effet, les mesures relevées par ces capteurs sont obligatoirement faussées notamment par d'éventuels jeux dans la transmission entre moteur et roue motrice, ou lors du patinage ou du glissement de cette roue motrice.

La présente invention vise à pallier les inconvénients des dispositifs odométriques connus et a pour objectif essentiel de fournir un dispositif odométrique permettant de mesurer les distances effectives parcourues par un véhicule autonome avec un pourcentage d'erreur sensiblement nul.

Un autre objectif est de fournir un dispositif odométrique utilisable avec les unités centrales des véhicules autonomes actuels, sans modification du logiciel de gestion de ces dernières.

Un autre objectif est de fournir un dispositif odométrique adaptable sur tous types de véhicules autonomes.

A cet effet, l'invention concerne un dispositif odométrique pour véhicule autonome, notamment véhicule autonome industriel tel que robot industriel, doté d'un châssis sur roues dont au moins une roue motrice reliée à un bloc moteur par un arbre moteur. Selon l'invention, ce dispositif se caractérise en ce qu'il comprend :
- une roue libre, dite odométrique, montée libre en rotation, de façon que son axe de rotation soit parallèle à celui de la roue motrice et disposé dans un même plan vertical que celui-ci,
- des organes-supports de la roue odométrique adaptés pour la solidariser au châssis du véhicule avec une liberté de débattement selon un axe orthogonal au plan de roulement de la roue motrice,
- et un capteur rotatif de mesure des déplacements angulaires de la roue odométrique.

Ce dispositif odométrique comporte donc une roue odométrique libre, non soumise au couple moteur. Ainsi, les distances mesurées par le capteur ne peuvent être faussées par un éventuel patinage ou glissement de la roue motrice ou par d'éventuels jeux dans la transmission entre le moteur et cette roue motrice.

De plus, les organes-supports de cette roue odométrique autorisant des débattements de cette dernière selon un plan orthogonal à sa surface de roulement, cette roue odométrique reste en contact permanent avec le sol, et ce quelles que soient les irrégularités de celui-ci. Par conséquent, bien que n'étant pas monté sur un organe moteur, le capteur mesure constamment une distance strictement identique à celle parcourue par la roue motrice.

Par ailleurs, la roue odométrique est positionnée de façon que son axe de rotation soit parallèle à celui de la roue motrice et disposé dans un même plan vertical que celui-ci. Ainsi, les logiciels de programmation des unités centrales des véhicules autonomes actuels sont utilisables avec le dispositif conforme à l'invention.

Selon un mode de réalisation préférentiel, la roue odométrique présente un diamètre externe au moins égal au diamètre de la roue motrice, de façon à pouvoir surmonter les obstacles rencontrés aussi facilement que cette roue motrice. Dans la pratique, on opte ainsi préférentiellement pour une roue odométrique de même diamètre que celui de la roue motrice, et ce dans le but de simplifier le logiciel de traitement de mesures.

Toutefois, lorsque ce dispositif est destiné à équiper des véhicules autonomes dotés de roues motrices de faible diamètre, il est préférable d'opter pour une roue odométrique de diamètre supérieur à celui de ces roues motrices, en vue de parfaire, la précision des mesures. Dans ce dernier cas, les organes-supports sont alors adaptés pour que l'axe de rotation de la roue odométrique soit décalé vers le haut par rapport à celui de la roue motrice, lorsque lesdites roues reposent sur un sol parfaitement de niveau.

La roue odométrique comporte, par ailleurs, préférentiellement, un moyeu central fixe en rotation porté par les organes-supports, et une jante montée libre en rotation autour du moyeu, et peut être disposée de deux façons différentes.

Un premier mode de réalisation consiste à disposer cette roue odométrique autour de l'arbre moteur, entre la roue motrice et le bloc moteur, le moyeu central de ladite roue odométrique étant doté d'un orifice de passage de l'arbre moteur de forme oblongue, adaptée pour permettre des débattements dudit moyeu selon un axe orthogonal au plan de roulement de la roue motrice.

Dans le cas où le véhicule n'est pas spécifiquement adapté pour permettre un tel montage, un deuxième mode de réalisation peut également consister à disposer la roue odométrique du côté extérieur de la roue motrice par rapport à l'arbre moteur, les organes-supports étant portés par une ossature fixée latéralement sur le châssis de façon à s'étendre autour desdites roues motrice et odométrique.

Le dispositif odométrique peut donc être utilisé pour équiper tout type de véhicule autonome, les seules modifications éventuelles à apporter concernant l'ossature portant le moyeu central lorsque ce dispositif est monté du côté extérieur de la roue motrice.

D'autre caractéristiques de l'invention ressortiront de la description détaillée qui suit en référence aux dessins annexés qui en représentent à titre d'exemples non limitatifs deux modes de réalisation préférentiels. Sur ces dessins qui font partie intégrante de la présente description :

- la figure 1 est une coupe transversale par un plan horizontal A d'un premier mode de réalisation d'un dispositif odométrique conforme à l'invention,

- la figure 2 est une coupe transversale partielle par un plan horizontal illustrant une variante de réalisation des moyens d'entraînement du capteur rotatif,

- la figure 3 est une coupe longitudinale par un plan vertical B du premier mode de réalisation de ce dispositif,

- la figure 4 en est une coupe longitudinale par un plan vertical C,

- les figures 5 et 6 sont deux vues schématiques illustrant les positions extrêmes de débattement de ce dispositif,

- la figure 7 est une coupe transversale par un plan horizontal d'un deuxième mode de réalisation d'un dispositif odométrique conforme à l'invention.

Le dispositif odométrique représenté aux figures est destiné à équiper un véhicule autonome tel qu'un robot industriel comportant de façon classique un châssis portant un bloc moteur protégé par un carter 1 et entraînant deux roues motrices telles que 2 par l'intermédiaire d'un arbre moteur 3.

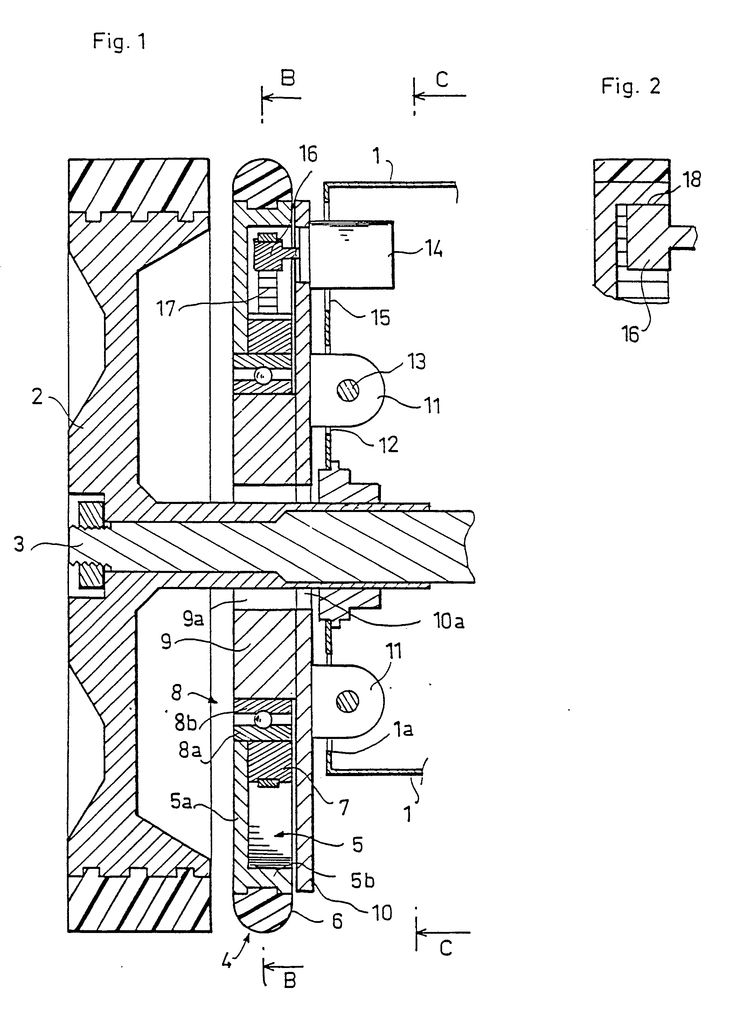

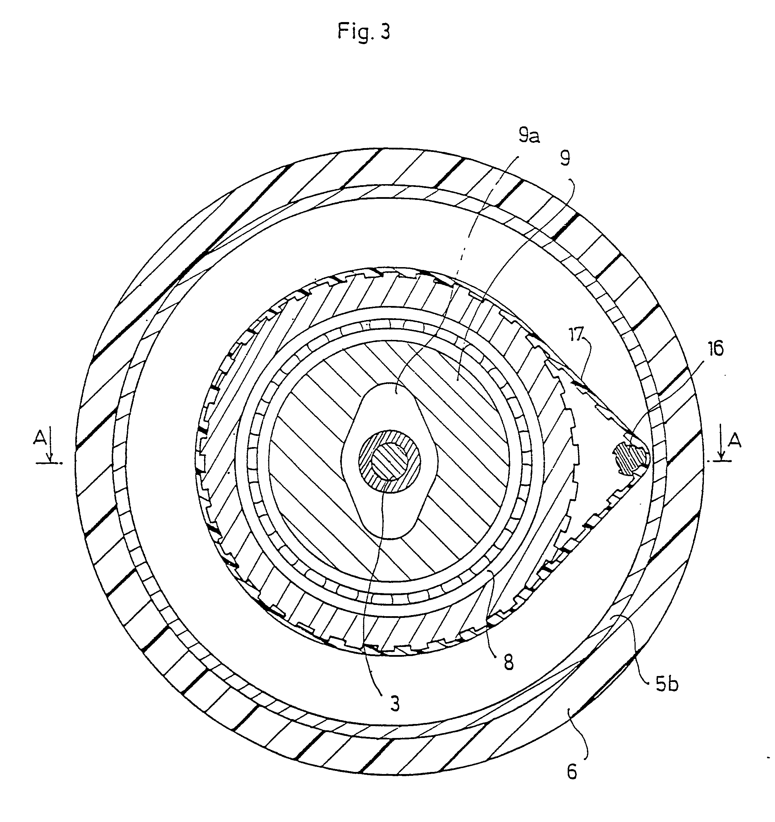

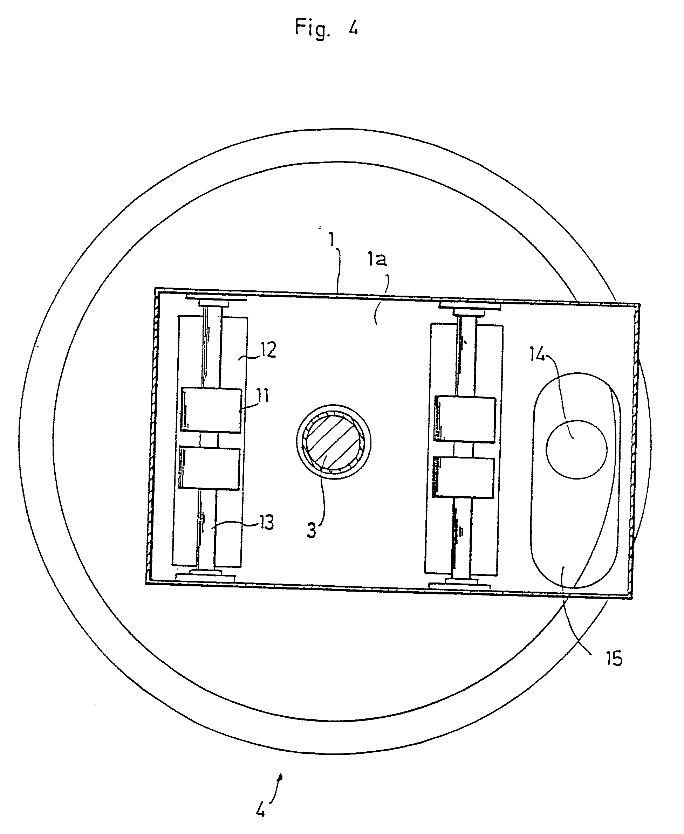

Selon un premier mode de réalisation représenté aux figures 1 à 6, ce dispositif comprend, en premier lieu, une roue odométrique 4 montée libre en rotation autour de l'arbre moteur 3 et disposée entre une roue motrice 2 et une des parois latérales 1a du carter de protection 1 du bloc moteur de façon que l'axe de rotation de cette roue odométrique 4 soit parallèle à l'axe de rotation de la roue motrice 2 et disposé dans un même plan vertical que celui-ci.

Cette roue odométrique 4 comprend un premier ensemble libre en rotation comportant une jante 5 se présentant sous la forme d'un flasque annulaire 5a doté d'une base creuse périphérique 5b portant un bandage de roulement 6. Cette jante 5 et le bandage de roulement 6 sont de diamètre adapté pour que la roue odométrique 4 présente le même diamètre externe que la roue motrice 2. En outre, le bandage de roulement 6 présente une bande de roulement de faible largeur par rapport à celle de la roue motrice 2, et est réalisé en un matériau synthétique adhérent tel que du polyuréthane.

Ce premier ensemble de la roue odométrique 4 comprend, en outre, un pignon d'entraînement 7 monté sur la bague externe tournante 8a d'un roulement à bille 8 et sur une face frontale duquel est solidarisé latéralement le flasque 4a de la jante 5.

La roue odométrique 4 comprend également un deuxième ensemble fixe en rotation porté par le châssis du véhicule. Ce deuxième ensemble comprend en premier lieu un moyeu 9 disposé autour de l'arbre moteur 3 du véhicule et sur la face périphérique duquel est monté la bague interne fixe 8b du roulement 8. Ce moyeu 9 est, en outre, doté d'un orifice 9a de passage de l'arbre moteur de forme oblongue, afin de permettre son débattement selon un axe perpendiculaire à la surface de roulement de la roue odométrique 4.

Ce deuxième ensemble comporte en outre un plateau 10 doté d'un orifice oblong 10a conjugué de celui du moyeu 9 et sur lequel est solidarisée latéralement une face frontale dudit moyeu.

Le dispositif odométrique comprend, par ailleurs, des organes-supports de la roue odométrique 4 adaptés pour solidariser l'ensemble fixe de cette dernière au carter 1 de protection du bloc moteur tout en autorisant des débattements de ladite roue selon un axe perpendiculaire à sa surface de roulement. Ces organes-supports comprennent deux paires de douilles à billes 11 disposées de part et d'autre de l'arbre moteur 3, chacune de ces paires étant constituée de deux douilles à billes 11 superposées.

Ces douilles à billes 11 sont solidarisées sur la face du plateau 10 opposée à la roue odométrique 4 de façon à s'étendre partiellement à l'intérieur du carter de protection 1 au travers d'orifices 12 rectangulaires à grand axe vertical, ménagés dans la paroi latérale de ce carter 1. Ces douilles 11 sont en outre montées coulissantes le long d'arbres de guidage verticaux 13 fixés à l'intérieur du carter de protection 1.

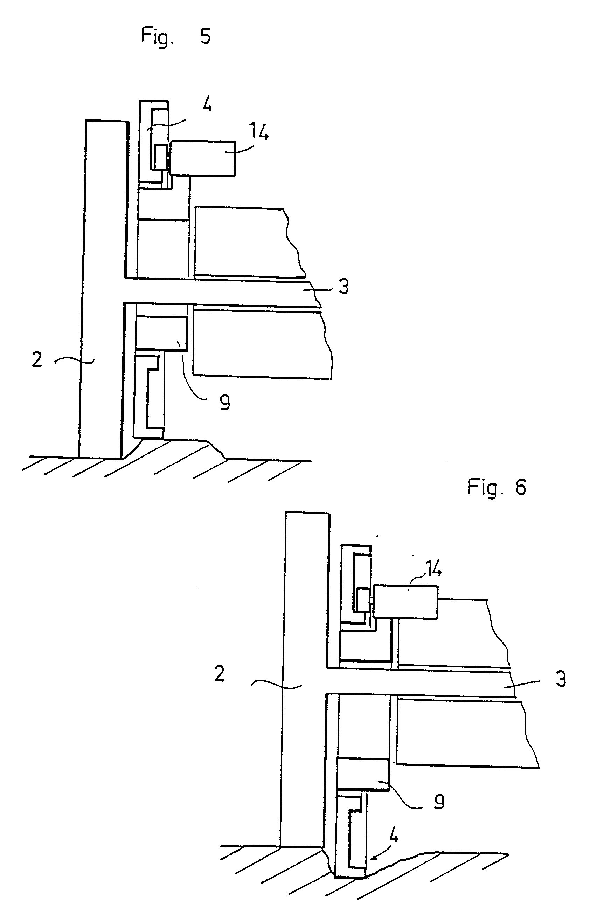

Tel que représenté aux figures 5 et 6, ces organes-supports autorisent donc des débattements du plateau 10 et par conséquent de la roue odométrique 4 selon un plan orthogonal à la surface de roulement de cette dernière, de part et d'autre d'une position moyenne où l'axe de rotation de ladite roue odométrique coïncide avec celui de la roue motrice. Par conséquent, cette roue odométrique 4 reste toujours en contact avec le sol et ce quelles que soient les irrégularités de ce sol.

En dernier lieu, le dispositif odométrique comprend des moyens de mesure comportant un capteur rotatif 14 de mesure de déplacement angulaire solidarisé sur la face du plateau 10 opposée à la roue odométrique 4 de façon à s'étendre partiellement à l'intérieur du carter 1 au travers d'un orifice 15 ménagé dans la face latérale 1a de ce dernier. Comme précédemment, l'orifice 15 présente, en outre, une forme oblongue à grand axe vertical, afin d'autoriser un débattement vertical du capteur similaire à celui de la roue odométrique 4.

Les moyens de mesure comportent, en outre, des moyens d'entraînement en rotation du capteur 14 constitués d'un petit pignon 16 monté sur l'extrémité de l'axe de ce capteur et entraîné par le grand pignon 7 au moyen d'une courroie crantée 17. Il est à noter, en outre, que l'orifice 15 de la paroi latérale 1a du carter 1 présente une largeur supérieure à celle du capteur 14 de façon à permettre le réglage de la tension de la courroie crantée 17.

Selon une variante représentée à la figure 2, l'entraînement du petit pignon 16 peut également être réalisé directement en utilisant une jante 5 dotée d'une base 5b présentant une face interne 18 d'entraînement direct du capteur 14. Cet entraînement peut être réalisé en utilisant, soit, comme précédemment, un petit pignon 16 qui est alors entraîné directement par la face interne 18 dentée de la base 5b de la jante, soit une roulette de diamètre calibré montée sur l'axe du capteur 14 et entraînée par friction par la face interne 18 de cette base 5b.

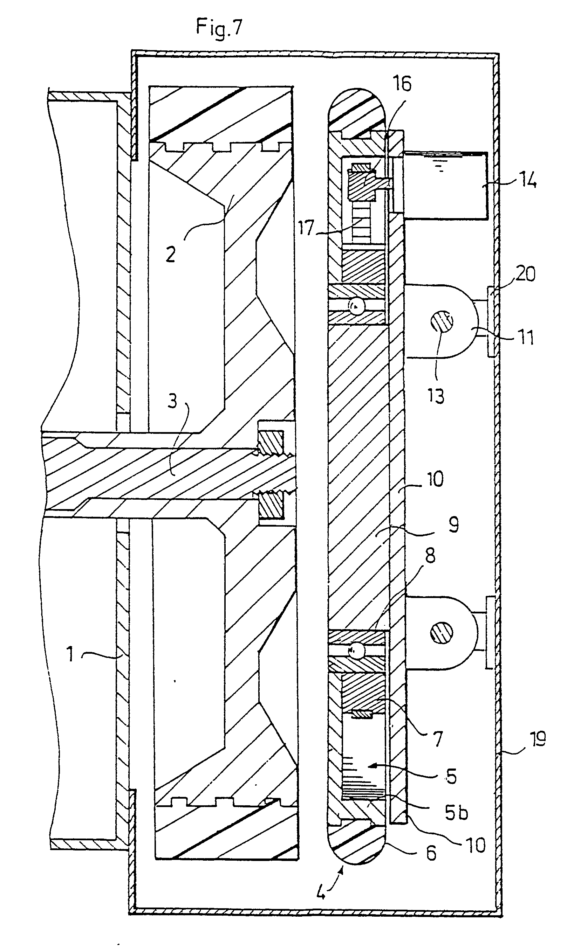

La figure 7 représente quant à elle un deuxième mode de réalisation d'un dispositif conforme à l'invention, comportant une roue odométrique disposée côté extérieur de la roue motrice par rapport à l'arbre moteur (afin de faciliter la description, les mêmes références que précédemment ont été utilisées pour désigner des organes similaires).

La roue odométrique 4 et les organes-supports 10, 11, 13 de cette dernière sont strictement identiques à ceux précédemment décrits, si l'on excepte le fait que les orifices 9a, 10a respectifs du moyeu central 9 et du plateau 10 sont maintenant facultatifs.

Le montage de ce dispositif odométrique sur le châssis du véhicule est réalisé au moyen d'un carénage 19 de forme adaptée pour recouvrir la roue motrice 2 et la roue odométrique 4. Ce carénage 19 est fixé latéralement sur le châssis du véhicule et comporte des pattes de fixation 20 des extrémités de chacun des arbres de guidage 13 des douilles à billes 11.

Comme précédemment, l'axe de rotation de la roue odométrique 4 se trouve donc dans un même plan vertical que celui de la roue motrice 2, et cette roue odométrique 4 possède également par rapport au carénage 19 et donc par rapport au châssis du véhicule et à la roue motrice 2, une liberté de débattement selon un plan orthogonal à sa surface de roulement.

**Revendications**

1/ - Dispositif odométrique pour véhicule autonome, notamment véhicule autonome industriel tel que robot industriel, doté d'un châssis sur roues, dont au moins une roue motrice (2) reliée à un bloc moteur par un arbre moteur (3), ledit dispositif odométrique étant caractérisé en ce qu'il comprend :
- une roue libre (4), dite odométrique, montée libre en rotation de façon que son axe de rotation soit parallèle à celui de la roue motrice (2) et disposé dans un même plan vertical que celui-ci,
- des organes-supports (10, 11, 13) de la roue odométrique (4) adaptés pour la solidariser au châssis du véhicule avec une liberté de débattement selon un axe orthogonal au plan de roulement de la roue motrice (2),
- et un capteur rotatif (14) de mesure des déplacements angulaires de la roue odométrique (4).

2/ - Dispositif odométrique selon la revendication 1, caractérisé en ce que la roue odométrique (4) présente un diamètre externe au moins égal au diamètre de la roue motrice (2).

3/ - Dispositif odométrique selon l'une des revendications 1 ou 2, caractérisé en ce que le capteur rotatif (14) est solidarisé aux organes-supports (10, 11, 13) de la roue odométrique (4) de façon à accepter les mêmes débattements que cette dernière.

4/ - Dispositif odométrique selon l'une des revendications 1, 2 ou 3, caractérisé en ce que la roue odométrique (4) comporte un moyeu central (9) fixe en rotation porté par les organes-supports (10, 11, 13), et une jante externe (5) montée libre en rotation autour du moyeu central (9).

5/ - Dispositif odométrique selon la revendication 4, caractérisé en ce que la roue odométrique (4) est disposée autour de l'arbre moteur (3), entre la roue motrice (2) et le bloc moteur, le moyeu central (9) de ladite roue odométrique étant doté d'un orifice (9a) de passage de l'arbre moteur (3) de forme oblongue, adaptée pour permettre des débattements dudit moyeu selon un axe orthogonal au plan de roulement de la roue motrice (2).

6/ - Dispositif odométrique selon la revendication 4, caractérisé en ce que la roue odométrique (4) est disposée côté extérieur de la roue motrice (2) par rapport à l'arbre moteur (3), les organes-supports (10, 11, 13) étant portés par une ossature (19) fixée latéralement sur le châssis de façon à s'étendre autour desdites roues motrice (2) et odométrique (4).

7/ - Dispositif odométrique selon l'une des revendications 4, 5 ou 6, caractérisé en ce que les organes-supports du moyeu central (9) comprennent au moins une douille à bille (11) solidarisée audit moyeu et montée coulissante le long d'un arbre de guidage fixe (13), sensiblement vertical.

8/ - Dispositif odométrique selon l'une des revendications 4 à 7, caractérisé en ce que la roue odométrique (4) et le capteur (14) sont dotés de moyens d'entraînement en rotation (7, 16, 17 ; 17, 18) dudit capteur adaptés pour que ce dernier soit entraîné directement en rotation par ladite roue odométrique.

9/ - Dispositif odométrique selon la revendication 8, caractérisé en ce que les moyens d'entraînement en rotation du capteur (14) comprennent un pignon (7) solidaire de la jante (5) de la roue odométrique (4) et monté libre en rotation sur le moyeu central (9), un pignon (16) solidaire du capteur (14) et une courroie crantée (17) de transmission engrenant lesdits pignons.

10/ - Dispositif odométrique selon la revendication 8, caractérisé en ce que la jante (5) de la roue odométrique (4) comporte une base (5b) dotée d'une face interne (18) agencée pour entraîner directement le capteur (14) en rotation.

Fig. 1

Fig. 2

Fig. 3

Fig. 4

Fig. 5

Fig. 6

Fig.7

Office européen
des brevets

**RAPPORT DE RECHERCHE EUROPEENNE**

Numero de la demande

EP 90 43 0009

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 117 516 (OWEN-ROCKWELL) --- | | G 01 C 22/00 |
| A | US-A-2 580 538 (GENTSCH) ----- | | |

DOMAINES TECHNIQUES RECHERCHES (Int. Cl.5)

G 01 C

Le présent rapport a été établi pour toutes les revendications

| Lieu de la recherche | Date d'achèvement de la recherche | Examinateur |
|---|---|---|
| LA HAYE | 23-07-1990 | KOLBE W.H. |